# EUROPÄISCHE PATENTANMELDUNG

(11) **EP 4 186 954 A1**
(43) Veröffentlichungstag der Anmeldung: **31.05.2023**
(21) Anmeldenummer: 22207737.2
(22) Anmeldetag: 16.11.2022
(51) Int. Cl.: C09D 183/06, C09D 5/16

(54) **HÄRTBARE KONDENSATIONSVERBINDUNGEN AUF BASIS VON ALKOXYFUNKTIONELLEN POLYSILOXANEN**

(30) Priorität: 25.11.2021 EP 21210450
(71) Anmelder: Evonik Operations GmbH, 45128 Essen (DE)
(72) Erfinder: de Gans, Berend-Jan, 45478 Mülheim an der Ruhr (DE); Knott, Wilfried, 45355 Essen (DE); Dudzik, Horst, 45326 Essen (DE); Hallack, Markus, 46514 Schermbeck (DE); Düllmann, Florian, 58099 Hagen (DE); Favresse, Philippe, 40880 Ratingen (DE)
(74) Vertreter: Evonik Patent Association

(57) **Zusammenfassung**

Die Erfindung betrifft härtbare Kondensationsverbindungen erhältlich durch die Umsetzung von nicht-endäquilibrierten Acetoxygruppentragenden Siloxanen mit mindestens einem alkoxyfunktionellen Polysiloxan in Gegenwart eines Katalysators.

## Beschreibung

Die Erfindung betrifft härtbare Kondensationsverbindungen auf Basis von alkoxyfunktionellen Polysiloxanen, deren Herstellungsverfahren sowie deren Verwendung in Beschichtungssystemen, die u.a. eine schmutzabweisende Eigenschaft aufweisen.

Beschichtungen werden auf Oberflächen zu dekorativen, funktionellen Zwecken oder zu Schutzzwecken aufgebracht. Dabei nimmt die Nachfrage nach Oberflächenschutz in unterschiedlichen Industriebereichen, wie Flugzeug, Automobil, Schienenfahrzeug, Schiffbau und Windenergie, stetig zu.

Bei der Funktionalisierung von Oberflächen und Beschichtungen werden verschiedene Technologien eingesetzt. Aus der Literatur ist der Ansatz der Oberflächenfunktionalisierung durch Mikro- und Nanostrukturierung von Beschichtungen, abgeleitet von der Schuppenstruktur von Haien, bekannt. Derartige Oberflächen werden bei Bauteilen von Schiffen, Flugzeugen, Rotorblättern von Windenergieanlagen oder Pipeline angewandt, um den Strömungswiderstand zu reduzieren. Auch selbstheilende Beschichtungen wurden entwickelt, bei denen eingekapselte funktionelle Wirkstoffe bei mechanischer Beschädigung des Systems freigesetzt werden und dann ihre heilende Wirkung entfalten. Diese selbstheilenden Oberflächen sind für den Korrosionsschutz interessant.

Ein weiteres bekanntes Problem sind die durch Vandalismus bedingten Verunreinigungen, wie z.B. die Graffiti-Schmierereien an Wänden oder Gegenständen. Dieses Problem betrifft nicht nur die Kommunen, sondern besonders auch die Verkehrsunternehmen. Denn die Reinigung solcher Oberflächen ist sehr aufwendig und kostspielig.

Es wurden große Anstrengungen bei der Entwicklung von Reinigungstechniken zur Entfernung von Graffitis gesetzt. Eine übliche Technik ist das Abtragen der Oberfläche mit einem Farbentferner, wie etwa Methylenchlorid, Benzol oder Toluol. Je nach Untergrund, Temperatur und Farbmittel und entsprechender Einwirkzeit wird das Farbmittel mittels beispielsweise eines Hochdruckreiniger entfernt. Dieser Prozess kann/muss mehrmals wiederholt werden. Etwaige Graffiti-Reste können dann durch Sandstrahlen entfernt werden, was ein Nachbearbeiten der Oberfläche erfordern kann, um ihr früheres Erscheinungsbild wiederherzustellen. Eine andere Technik ist es, die Oberfläche aufwendig neu zu lackieren bzw. zu beschichten, was ebenfalls viel Zeit erfordert und erhebliche Kosten verursachen kann.

Des Weiteren sind Antifouling-Beschichtungen bzw. Foul-Release-Beschichtungen bekannt, durch die der Algen- und Muschelbewuchs von Oberflächen, die im ständigen Kontakt mit Wasser stehen, verhindert oder zumindest deutlich erschwert wird. Besonders bei den permanenter Bewässerung ausgesetzten Strukturen, wie z. B. bei Schiffsrümpfen, Bojen, Fischnetzen, Zug- und Abflussrohren zum Kühlen, off-shore-Bohranlagen oder Wassertanks, die dem Meerwasser und/oder Süßwasser ausgesetzt sind, verursacht das Anhaften und das Wachstum von Organismen (Bio-Fouling) beträchtliche ökonomische Verluste. Diese resultieren im Falle von Schiffen z.B. aus der erhöhten Reibung und dem damit einhergehend erhöhten Treibstoffverbrauch. Auch erleiden Oberflächen bei statischen Strukturen durch den erhöhten Widerstand gegenüber Wellen oder Strömungen mechanischen Schaden, was zu kürzeren Wartungszyklen führt und somit auch zu einer verringerten Betriebszeit.

Foul-Release Beschichtungen basieren oft auf Polysiloxanen oder Silikon-Elastomeren deren Wirkmechanismus in der Ausbildung einer Antihaft-Oberfläche besteht, auf der Wasserorganismen nicht anhaften können oder die Haftkräfte so niedrig sind, dass sie durch die Bewegung im Wasser abgelöst werden.

Es ist daher bekannt, Beschichtungen Polysiloxane zuzusetzen, um bestimmte Eigenschaften zu erzielen. Durch die chemische Modifizierung der Polydimethylsiloxan-Kette beispielsweise konnten die wichtigsten Silikon-Eigenschaften, wie etwa Verträglichkeit, Gleitwiderstand oder Kratzfestigkeit gesteuert werden. Der Einsatz der Polysiloxane ist weit gestreut und sehr vielschichtig.

Seit den Anfängen der Silikonindustrie besitzen kondensationsvernetzbare hydroxy- und/ oder insbesondere alkoxy-terminierte aber auch acetoxyfunktionelle Polydiorganosiloxane als typische Vertreter von Silikonharzvorprodukten eine herausragende Bedeutung. So zielt die Lehre der EP 0 157 318 B1 auf ein Verfahren zur Herstellung von Silikonharzvorprodukten der allgemeinen Formel R²ₐSi(OR¹)_{b}O(_{4-a-b)/2} ab, die durch Alkoholyse/Hydrolyse und partielle Kondensation von Organochlorsilanen mit Alkohol/Wasser gewonnen werden.

CN105131293 B geht auf acetoxy-funktionalisierte MQ-Harze und deren Herstellung ein. In einem Hydrolysemedium bestehend aus verdünnter Salzsäure und Ethanol werden demgemäß zunächst Hexamethyldisiloxan und Tetraethoxysilan zu einem ethoxyfunktionellen Silikonharz-Präpolymer umgesetzt und dieses wird in einem zweiten Schritt durch Reaktion mit einem Organoacetoxysilan zu einem selbstvernetzenden Acetoxy-MQ-Harz modifiziert.

In ähnliche Richtung geht die Lehre von Clarke (US 3.032.529), die stabilisierte Organopolysiloxanharze beschreibt. Mit dem Ziel lagerstabile Silikonbeschichtungssysteme für Holz-, Kunststoff-, Metall- und Keramikoberflächen herzustellen, die innerhalb von 24 Stunden bei Raumtemperatur aushärten, lehrt die Schrift die Acylierung reiner und/ oder gemischter, unvollständig kondensierter =Si-OH terminierter Diorganosiloxanen mit Acylierungsmitteln, vorzugsweise mit Triacyloxysilanen, um alle Si-gebundenen Hydroxylgruppen zu entfernen.

Ohne auf die Nutzung von Acetoxysiloxanen abzustellen, beschäftigt sich US 4,585,705 (Broderick et al.) mit organopolysiloxan-basierten, auf dem Substrat härtbaren Trennbeschichtungen, in die hydroxyfunktionelle Methyl-, Phenyl- und gemischte Methyl-Phenylharze neben einem Methyltrimethoxysilan(derivat), und auch kleine Anteile trimethylsilyl-endgeblockter Diorganosiloxane sowie Titanatester Eingang nehmen.

Ebenfalls bekannt ist die Verknüpfung von terminal hydroxyfunktionellen Siloxanen (PDM-Siloxanen) mit einem multifunktionellen Acetoxysilan als Quervernetzer zu hydrolytisch instabilen, mit Acetoxygruppen versehenen Siloxanpräpolymeren (H.F. Mark, Concise Encyclopedia of Polymer Science and Technology, 3rd Edition, Seite 1112, Wiley-Verlag, (2013) und auch in A.S. Hoffman et al., Biomaterials Science: An Introduction to Material in Medicine, 2nd Edition, Seiten 83 - 84, Elsevier Acad. Press, San Diego, (2004)).

Mit US 2009/0226609 beanspruchen Boisvert et al. Q-Titan basierte Silikonharze, die hergestellt werden, indem man ein Stoffsystem bestehend aus Di-(t-butoxy)diacetoxysilan, Tetrahydrofuran, Wasser und Tetra(t-butoxy)titan zur Reaktion bringt.

Gemäß C. Robeyns et al. (Progress in Organic Coatings 125, S. 287 - 315, (2018) findet hierbei zunächst eine Hydrolyse des Di-(t-Butoxy)diacetoxysilans unter Bildung von Ortho-Kieselsäure Si(OH)₄ statt, die dann unter Freisetzung von 4 Äquivalenten t-Butanol mit Tetra(t-butoxy)titan zum gemischten Titan-silikonharz kondensiert.

Der Einsatz von Titanaten ist jedoch im Hinblick auf ihre Neigung zur Zersetzung in Anwesenheit von Wasser problematisch, da diese zur Bildung und Ausfällung des unlöslichen und speziell in Beschichtungssystemen Trübung verursachenden, vierwertigen Titanhydroxids führt. Das gilt insbesondere für diejenigen Systeme, bei denen man in Gegenwart von Titanaten eine Hydrolyse durchführt. Zur Überwindung dieses Problem, speziell bei der Herstellung von anti-abrasiven Beschichtungssystemen für transparentes Polycarbonat, schlägt Leclaire (US 5,357,024) vor, ein Alkoxysilan-Hydrolysat, das kondensationsfähige =SiOH-Gruppen besitzt, mit einer Acyltitanat-Verbindung und unter nachgeschaltetem Wasserzusatz in Verdünnung umzusetzen, so dass hieraus ein Siloxan-Präpolymer mit hierin gebundenem Titan im Bereich von 20 bis 30 Gewichtsprozent TiO₂ bezogen auf den Festkörper entsteht. Leclaire gewinnt die Acyltitanatverbindungen, indem er Tetraalkyltitanate bzw. Tetraalkoxytitan-Verbindungen in nichtwässrigen Solventien, wie zum Beispiel in Alkoholen mit Carbonsäuren zur Umsetzung bringt.

Leclaire beobachtet bei Einsatz dieser hydrolysierbaren Titanverbindungen nicht die Bildung von Präzipitaten in den Beschichtungsmatrizes, selbst wenn die Hydrolyse der Silane unter harschen Bedingungen erfolgt. Leclaire interpretiert diese Beobachtung mit der Annahme, dass die in der Titanverbindung gebundene(n) Acyloxygruppe(n) die Reaktivität der Titanverbindung verringer(t)n.

US 5,357,024 lehrt weiter, dass diese Acyltitanate ausgehend von Tetra-Alkyltitanaten erhalten werden, bei denen man die Alkoxyfunktionen mit Acyloxyfunktionen substituiert. Die Herstellung erfolgt in Abwesenheit von Wasser durch Reaktion eines Tetra-Alkoxytitans oder eines Tetra-Alkyltitanats der Formel Ti(OR')₄, worin die Reste R' gleich oder verschieden sein können, mit einer Carbonsäure RCOOH, wobei man die Menge der für diese Reaktion verwendeten Säure je nach Anzahl der Alkoxyfunktionen, die man substituieren möchte, in Mengen von 1 bis 4 Äquivalenten Säure zu 1 Äquivalent Tetra-Alkoxytitan wählt. Die Reaktion erfolgt vorzugsweise in Gegenwart eines geeigneten, nicht- wässrigen Lösungsmittel, z. B. eines Alkohols wie Isopropanol.

Eine silanische AB₃-Typ-Vorstufe zum Aufbau hyperverzweigter Polyethoxysiloxane anstrebend, beschreiben Jaumann et al. in Macromol. Chem. Phys. 2003, 204, 1014-1026 die bei 137°C und über einen Zeitraum von mindestens 36 Stunden (in Dissertation M. Jaumann, 04.09.2008, RWTH Aachen S. 47 sogar 89 Stunden benötigend) stattfindende Reaktion von Tetraethoxysilan mit Acetanhydrid, die unter Ethylacetatfreisetzung Acetoxytriethoxysilan in Ausbeuten von nur ca. 39% als AB₃-Typ-Vorstufe hervorbringt. Den Versuch unternehmend, die unbefriedigende Reaktionskinetik zu verbessern, setzt Jaumann auch Tetraethylorthotitanat als Katalysator in niedriger und hoher Dosierung ein. Mit 0,155 mol-% Tetraethylorthotitanat-Zusatz reduziert sich der Zeitbedarf der mit dann ca. 94% Umsatz verlaufenden Reaktion auf 14,5 Stunden. 0,95 mol-% Tetraethylorthotitanat-Zusatz verkürzt bei ca. 88% Umsatz die Reaktionszeit auf 1,5 Stunden jedoch unter massiven Verlust der Produktreinheit. Im daraus gewonnenen Polyethoxysiloxan stammen ca. 6 mol-% aller Si-Atome aus dem eingesetzten Tetraethoxysilan (Dissertation M. Jaumann, 04.09.2008, RWTH Aachen S. 47 - 50).

Gleichfalls Jaumanns Arbeiten reflektierend, beansprucht die WO 2014/187972 die Verwendung fluorfreier, hochverzweigter Polyalkoxysiloxane zur Herstellung schmutzabweisender Oberflächenbeschichtungen mit einem Verzweigungsgrad von VG > 0,4 gemäß einer komplizierten Berechnungsformel unter Einbeziehung der ²⁹Si-NMR-Spektroskopie. Das hochverzweigte Polyalkoxysiloxan wird mit Tetraethoxysilan, Essigsäureanhydrid und Tetrakis(trimethylsiloxy)titan oder mit Dynasylan^{®}40, Essigsäureanhydrid und Titan-4-Isopropoxid oder mit Dynasylan^{®}40, Essigsäureanhydrid und α-n-Butyl-ω-trimethoxysilyl-ethyl-polydimethylsiloxan hergestellt

Nicht auf Polyalkoxysiloxane abstellend, zielt die Lehre der WO 2019/200579 auf eine Polysiloxan-Zusammensetzung zur Herstellung eines bei Raumtemperatur vernetzenden, nicht korrosiven Elastomers, das ein hydroxyl-terminiertes Polyorganosiloxan, ein Diacetoxysilan, ein multi-funktionelles Alkoxysilan, sowie einen Füllstoff und einen Katalysator enthält.

Die WO 2012/040305 offenbart eine härtbare Zusammensetzung enthaltend Organosiloxanblockcopolymere mit einem gewichtsmittleren Molekulargewicht M_{w} über 20.000 g/mol, wobei diese durch die Umsetzung von silanolgruppentragenden Organosiloxanharzen (Komponente b) mit linearen geminalen diacetoxysubstituierten Organosiloxanen (Komponente a) generiert werden. "Geminale diacetoxysubstituiert" bedeutet hierbei, dass das Organosiloxan endständig an einem Si-Atom zwei benachbarte Acetoxygruppen [-Si-(OAc)₂] aufweist. Diese geminalen diacetoxysubstituierten Organosiloxane werden durch die Reaktion von silanolterminierten Polydiorganosiloxanen mit Alkyltriacetoxysilanen hergestellt. Somit führt dieses Verfahren zu multiplen Vernetzungen um das Zentrum des eingesetzten Acetoxysilans. Bei diesem Verfahren muss die dabei entstandene Essigsäure aus dem System entfernt werden. Die Abtrennung der freigesetzten Essigsäure ist schwierig, da sie Wasserstoffbrückenbindungen aufbaut, die deren thermisches Auskreisen behindern. Die Sicherstellung der Säurefreiheit (und Wasserfreiheit) im linearen Organosiloxanblockcopolymer ist essenziell, denn sonst ist dessen Einsetzbarkeit auf säureempfindlichen Substraten nicht gegeben. Zur Herstellung wird außerdem ein Lösemittel benötigt, da die verwendeten Edukte bzw. Silsesquioxane fest sind.

Die Aufgabe der vorliegenden Erfindung ist daher die Bereitstellung von Verbindungen, die zur Herstellung von Beschichtungssystemen geeignet sind, wobei diese eine verbesserte antiadhäsive Wirkung aufweisen, ohne dass die übrigen Eigenschaften signifikant beeinträchtigt werden und die im Stand der Technik genannten Nachteile nicht aufweisen.

Zur Lösung der Aufgabe werden Kondensationsverbindungen eingangs genannter Art vorgeschlagen, welche durch die Umsetzung von
- Acetoxygruppentragenden Siloxanen gemäß Formel (I): 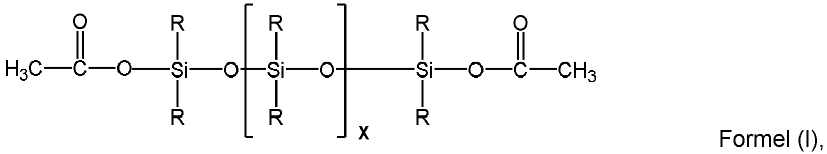 wobei R = ein Alkylrest mit 1 bis 4 Kohlenstoffatomen und/oder Phenylrest, bevorzugt R = Methylrest und 1 ≤ x ≤ 500, bevorzugt 3 ≤ x ≤ 100, besonders bevorzugt 5 ≤ x ≤ 50 ist, wobei die Acetoxygruppentragenden Siloxane gemäß Formel (I) nicht endäquilibriert sind,
- mit mindestens einem alkoxyfunktionellen Polysiloxan gemäß der Formel (II)

   R¹_{c}Si(OR²)_{d}O_{(4-c-d)/2} Formel (II)

   worin c größer gleich 0 bis kleiner gleich 2 und d größer gleich 0 bis kleiner gleich 4 sind und die Summe von c + d kleiner 4 ist,
   R¹ unabhängig voneinander, gleich oder verschieden lineare oder verzweigte, gesättigte wie auch ein oder mehrfach ungesättigte oder aromatische Kohlenwasserstoffreste, und
   R² eine Alkylgruppe bestehend aus 1 bis 8 Kohlenstoffatomen, bevorzugt eine Methyl- oder Ethylgruppe, ist
- in Gegenwart eines Katalysators,
   erhältlich sind.

Es hat sich herausgestellt, dass die erfindungsgemäßen härtbaren Kondensationsverbindungen zur Herstellung von Beschichtungssystemen mit anti-adhäsiver Eigenschaft, insbesondere mit Anti-Graffiti-Wirkung, verwendet werden können. Zudem weisen die daraus hergestellten Beschichtungen überraschend eine bessere Gleitfähigkeit auf als übliche Beschichtungen.

Überraschend konnte auch festgestellt werden, dass die mit den erfindungsgemäßen härtbaren Kondensationsverbindungen hergestellten Beschichtungssystemen hydrophobe Eigenschaften aufweisen. Die hydrophobe Eigenschaft einer Beschichtung dient u.a. als Barrierewirkung gegen das Eindringen von Wasser bei Beschädigung der Lackoberfläche in das zu schützende Substrat, wie etwa Holz, Mauerwerk oder Metall.

Zur Beurteilung der hydrophoben Eigenschaft wurde der Kontaktwinkel als ein Maß für die Benetzbarkeit eines Festkörpers durch eine Flüssigkeit herangezogen. Bei vollständiger Benetzung beziehungsweise Spreitung beträgt der Kontaktwinkel 0°. Zwischen 0° und 90° gilt der Festkörper als hydrophil, über 90° als hydrophob. Bei ultrahydrophoben Materialien mit dem so genannten Lotuseffekt nähert sich der Kontaktwinkel dem theoretischen Grenzwert von 180°.

Es wurde festgestellt, dass die mit der erfindungsgemäßen härtbaren Kondensationsverbindungen hergestellten Beschichtungen einen höheren Wasserkontaktwinkel, über 90°, als üblichen Beschichtungen aufweisen.

Es wurde in den Versuchen festgestellt, dass die mit der erfindungsgemäßen härtbaren Kondensationsverbindungen hergestellten Beschichtungen Schmutzanhaftungen jeglicher Art verhindern oder reduzieren und keine Beeinträchtigung sonstiger Eigenschaften aufzeigen.

Die verschiedenen Fragmente der in der Formel (I) bis Formel (III) angegebenen Siloxanketten können statistisch verteilt sein. Statistische Verteilungen können blockweise aufgebaut sein mit einer beliebigen Anzahl an Blöcken und einer beliebigen Sequenz oder einer randomisierten Verteilung unterliegen, sie können auch alternierend aufgebaut sein oder auch über die Kette einen Gradienten bilden, insbesondere können sie auch alle Mischformen bilden.

Die hier wiedergegebenen Indexzahlen und die Wertbereiche der angegebenen Indizes können als Mittelwerte der möglichen statistischen Verteilung der tatsächlichen vorhandenen Strukturen und/oder deren Mischungen verstanden werden.

Das Wortfragment "Poly" umfasst im Zusammenhang mit dieser Erfindung nicht nur ausschließlich Verbindungen mit zumindest 3 Wiederholungseinheiten eines oder mehrerer Monomere im Molekül, sondern insbesondere auch solche Zusammensetzungen von Verbindungen, die eine Molekulargewichtsverteilung aufweisen und dabei ein mittleres Molekulargewicht von mindestens 200 g/mol besitzen. Bei dieser Definition ist dem Umstand Rechnung getragen, dass es auf dem betrachteten Gebiet der Technik üblich ist, solche Verbindungen bereits als Polymere zu bezeichnen, auch wenn sie nicht einer Polymerdefinition analog OECD- oder REACH-Richtlinien zu genügen scheinen.

Bei Prozentangaben handelt es sich, wenn nicht anders angegeben, um Angaben in Gewichtsprozent.

Sind nachfolgend Messwerte angegeben, so sind diese Messungen, wenn nicht anders angegeben, bei Normalbedingungen (25 °C und 1013 mbar) durchgeführt worden.

Werden nachfolgend Mittelwerte angegeben, so handelt es sich, wenn nicht anderes angegeben, um Gewichtsmittel.

Aus dem Stand der Technik sind endäquilibrierte Acetoxygruppentragende Siloxane bekannt. Zahlreiche Syntheseverfahren sind dem Fachmann bekannt, wie beispielsweise aus den Lehren der europäischen Patentanmeldungen EP 3611215A, EP 18189072.4, EP18189075.7 und EP 18189074.0 zu entnehmen sind,

Bei der Herstellung von endäquilibrierten Acetoxygruppen-tragenden Siloxanen auf Basis von zyklischen Siloxanen und Essigsäureanhydrid bleiben, bedingt durch die Lage des chemischen Gleichgewichtes, erhebliche Mengen an zyklischen Siloxanen wie zum Beispiel Octamethylcyclotetrasiloxan übrig, die eine Gefahr für Mensch und Umwelt darstellen. Deren Abtrennung durch Destillation ist mit großem Aufwand verbunden. Erfahrungsgemäß werden bei der destillativen Abtrennung von Siloxanzyklen aus endäquilibrierten Acetoxysiloxanen auch stets gewisse Anteile kurzkettiger Acetoxysiloxane mitentfernt die, falls sie nicht wieder einer neuen Synthese zugeführt werden, einen wirtschaftlichen Verlust bedeuten. Zudem nehmen die kurzkettigen Acetoxysiloxane positiven Einfluss auf die späteren Anwendungseigenschaften der erfindungsgemäß beanspruchten Kondensationsverbindungen.

Für die erfindungsgemäßen Kondensationsverbindungen werden daher nicht-endäquilibrierte Acetoxygruppen-tragenden Siloxanen auf Basis von Silanolgruppen-tragenden Siloxanen und Essigsäureanhydrid eingesetzt. Angesicht der Tatsache, dass bei diesem Verfahren keine zusätzlichen Zyklen gebildet werden, entfällt die Notwendigkeit einer Destillation. Vorteilhaft erweist sich, dass bedingt durch die höheren Anteile kurzkettiger und damit sehr reaktiver Acetoxysiloxane die erfindungsgemäß hergestellten Kondensationsverbindungen eine graduell verbesserte Härtungskinetik aufweisen, die für gewisse Anwendungen wünschenswert ist.

Vorzugsweise werden erfindungsgemäß lineare α,ω-Hydroxygruppen-tragende Siloxane zumindest der Formel (III) verwendet: 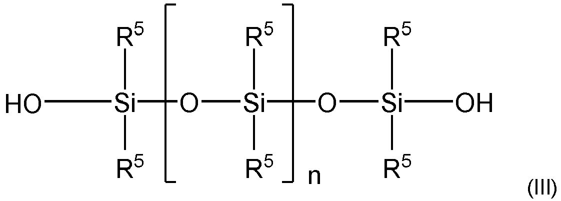 mit R⁵ gleich Alkylrest und/oder aromatischer Rest, umfassend 1 bis 10 C-Atome, bevorzugt ein Methylrest und mit 1 ≤ n ≤ 500, bevorzugt 3 ≤ n ≤ 100, besonders bevorzugt 5 ≤ n ≤ 50.

Derartige lineare α,ω-Hydroxygruppen-tragende Siloxane sind beispielsweise unter der Bezeichnung Polymer OH (Fa. Evonik), PDM-Siloxan (Fa. Wacker), Xiameter OHX oder Dowsil 2-1273 Fluid (beide Fa. Dow) erhältlich.

Vorzugsweise sind die nicht-endäquilibrierten Acetoxygruppen-tragenden Siloxane gemäß Formel (I) durch die Umsetzung von linearen α,ω-Hydroxygruppen-tragenden Polysiloxanen mit Essigsäureanhydrid erhältlich.

Vorzugsweise weisen die nicht-endäquilibrierten Acetoxygruppen-tragenden Siloxane gemäß Formel (I) ausschließlich D-Einheiten auf.

Vorzugsweise werden nicht-endäquilibrierte α,ω-Acetoxygruppen-tragende, lineare Polydimethylsiloxane für die Umsetzung eingesetzt.

Acetoxysiloxane und Acetoxygruppen-tragende Siloxane werden hierbei als Synonyme verwendet.

Geeignete alkoxyfunktionelle Polysiloxane gemäß der Formel (II) werden häufig auch als Silikonharze bezeichnet. Bei dieser Formel handelt es sich um die kleinste Einheit der gemittelten Strukturformel des Silikonpolymers. Die Anzahl der Wiederholungen ergibt sich aus dem über GPC bestimmten Zahlenmittel Mn.

Die Herstellung von derartigen Silikonharzen ist der Literatur lange bekannt (siehe hierzu in W. Noll - Chemie und Technologie der Silicone, Wiley-VCH Verlag GmbH & Co. KGaA, Weinheim, 1960), und wird auch in der deutschen Patentschrift DE 34 12 648 beschrieben.

Bevorzugt sind die Reste R¹ unabhängig voneinander gesättigte, verzweigte oder unverzweigte Alkylreste mit 1 bis 17 Kohlenstoffatomen und/oder ein- oder mehrfach ungesättigte, verzweigte oder unverzweigte Alkenylreste mit 2 bis 17 Kohlenstoffatomen oder aromatische Gruppen mit 6 bis 12 Kohlenstoffatomen. Besonders bevorzugt weisen die Alkyl- und Alkenylreste bis zu 12, weiter bevorzugt bis zu 8 Kohlenstoffatome auf. Besonders bevorzugt sind alle Reste R¹ gleich Methyl und/oder Phenyl.

Bevorzugt sind die Reste R² unabhängig voneinander gesättigte, verzweigte oder unverzweigte Alkylreste mit 1 bis 8 Kohlenstoffatomen. Vorzugsweise ist R² ausgewählt aus Methyl- oder Ethylgruppen. Letztere eignen sich besonders für als HAPS-free (Hazardous Air Pollutant Substance) bezeichnete Phenylpolysiloxane oder Phenyl-Alkylpolysiloxane, die kein Lösemittel wie Toluol, Xylol oder Benzol enthalten und außerdem bei der bei Raumtemperatur stattfindenden katalytischen Hydrolyse-Kondensations-Vernetzung kein Methanol freisetzen, sondern nur Ethanol.

Bevorzugte Verbindungen der allgemeinen Formel (II) weisen als Rest R² Methyl- und/oder Ethylgruppen auf mit 3 bis 50 Gew.-% Alkoxyfunktionalität, bevorzugt 5 bis 40 Gew.-%, und besonders bevorzugt 7 bis 30 Gew.-%, bezogen auf die Gesamtmasse der Verbindung.

Das gewichtsmittlere Molekulargewicht M_{w} der Verbindung der allgemeinen Formel (II) ist bevorzugt 200 bis 20.000 g/mol, besonders bevorzugt 200 bis 10.000 g/mol, weiter bevorzugt 300 bis 3.000 g/mol oder besonders bevorzugt 400 bis 2.000 g/mol.

Für die erfindungsgemäße Umsetzung spielt die Alkoxyfunktionalität der Polysiloxane der allgemeinen Formel (II) eine große Rolle.

Alkoxyfunktionell im Sinne der vorliegenden Erfindung bedeutet, dass im Polysiloxan Alkylgruppen über Sauerstoff an Silicium gebunden vorliegen. Vorzugsweise bedeutet alkoxyfunktionell die Anwesenheit von Si-O-R-Gruppen. Die Alkoxyfunktionalität gibt den Massenanteil der Alkoxygruppen bezogen auf das Polysiloxan an.

Es sei hier angemerkt, dass sich die Verwendung von alkoxyfunktionellen Polysiloxanen der Formel (II) als vorteilhaft erweist gegenüber dem Einsatz der im Stand der Technik aufgeführten Silanole. Die Lagerstabilität =SiOH-Gruppen-tragender Siloxane ist sehr begrenzt, insbesondere unter dem Einfluss ubiquitär immer vorhandener Spuren von Säuren oder Basen. Darüber hinaus sind die typischerweise für Beschichtungssysteme verwendeten silanolfunktionellen Polysiloxane in der Regel fest und benötigen zu ihrer Verarbeitung stets ein Lösungsmittel, um sie entweder weiter zu funktionalisieren oder aber zu applizieren. Einmal auf ein Substrat aufgetragen sind Silanolgruppen tragende Polysiloxane im Vergleich zu Alkoxygruppen tragenden Systemen weniger reaktiv, und brauchen hohe Temperaturen damit eine Quervernetzung stattfindet. Somit können silanolfunktionelle Polysiloxanen auf temperaturempfindlichen Substraten nicht zum Einsatz kommen. Für Außenanwendungen auf nicht-beheizbaren Substraten, wie zum Beispiel für eine Anti-Graffiti-Beschichtung, sind silanolfunktionelle Polysiloxane deshalb ungeeignet.

Bevorzugt sind die Polysiloxane der allgemeinen Formel (II) mit R¹ gleich Methyl, sogenannte Methylsilikonharze, mit einer Alkoxyfunktionalität von 7 bis 35 Gew.-% bezogen auf die Gesamtmasse der Polysiloxane und einer gewichtsmittleren Molmasse von 300 bis 2.000 g/mol.

Auch bevorzugt sind die Polysiloxane der allgemeinen Formel (II) mit R¹ gleich Phenyl, sogenannte Phenylharze. Sie weisen bevorzugt einen Anteil der Alkoxygruppen von 1 - 40 Gew.-%, bezogen auf das Polysiloxan auf, besonders bevorzugt 3 - 35 Gew.-%, und ganz besonders bevorzugt 5 - 30 Gew.-%.

Weiterhin bevorzugt beträgt das gewichtsmittlere Molekulargewicht Mw der Phenylharze 200 bis 10.000 g/mol, bevorzugt 200 bis 3.000 g/mol, besonders bevorzugt 300 bis 2.000 g/mol.

Besonders bevorzugt beträgt das gewichtsmittlere Molekulargewicht Mw der Phenylharze 700 bis 2.000 g/mol.

In einer weiteren Ausführungsform sind die Polysiloxane der allgemeinen Formel (II) mit R¹ gleich Phenyl- und Methylgruppen bevorzugt, sogenannte Methyl-Phenylharze.

Besonders bevorzugte Methyl-Phenylharze weisen als Alkoxygruppen Methoxy- und/oder Ethoxy-Gruppen auf, wobei der Anteil der Alkoxygruppen, insbesondere der Methoxy- bzw. Ethoxy-gruppen, mindestens 1 Gew.-%, bezogen auf das Polysiloxan, vorzugsweise 2 bis 40 Gew.-%, besonders bevorzugt 3 bis 35 Gew.-%, und ganz besonders bevorzugt 5 bis 30 Gew.- % beträgt.

Das numerische auf die Molzahl im Harz bezogene Phenyl- zu Methyl-Verhältnis liegt bevorzugt im Bereich von 1 zu 0,1 bis 0,1 zu 1, vorzugsweise im Bereich von 0,5 zu 1 bis 1 zu 0,5.

Werden in der vorliegenden Erfindung chemische (Summen-)Formeln verwendet, so können die angegebenen Indizes sowohl absolute Zahlen als auch Mittelwerte darstellen.

Bei polymeren Verbindungen stellen die Indizes vorzugsweise Mittelwerte dar.

Bei Prozentangaben handelt es sich, wenn nicht anders angegeben, um Angaben in Gewichtsprozent.

Sind nachfolgend Messwerte angegeben, so sind diese Messungen, wenn nicht anders angegeben, bei Normalbedingungen (25 °C und 1013 mbar) durchgeführt worden.

Werden nachfolgend Mittelwerte angegeben, so handelt es sich, wenn nicht anderes angegeben, um Gewichtsmittel.

Bevorzugt wird zur Herstellung der erfindungsgemäßen Kondensationsverbindungen ein Katalysator ausgewählt aus Zinndiacetat, Zinndioctoat, Dibutylzinndiacetylacetonat, Dibutylzinndilaurat, Zinntetraacetat, Dibutylzinndiacetat, Dibutylzinndioctoat, Dibutylzinndioleat, Dioctylzinndilaurat, Dioctylzinndineodecanoat, Dimethoxydibutylzinn, Dimetylzinn, Dibutylzinnbenzylmaleat, Bis-(triethoxysiloxy)dibutylzinn, Diphenylzinndiacetat, Tetraethoxy-titan, Tetra-n-propoxy-titan, Tetra-i-propoxy-titan, Tetra-n-butoxytitan, Tetra-i-butoxytitan, Tetrakis-(2-ethylhexoxy)titan, Di-i-propoxy-bis(ethylacetoacetat)titan, Dipropoxy-bis-(acetylacetonat)-titan, Di-i-propoxy-bis-(acetylacetonat)-titan, Dibutoxy-bis-(acetylacetonat)-titan, Tri-i-acetat-propoxyallyltitan, Isopropoxyoctylenglycol- oder Bis(acetylacetonat)-titanoxid, Bleidiacetat, Blei-di-2-ethylhexanoat, Blei-dineodecanoat, Bleitetraacetat, Bleitetrapropionat, Zinkacetylacetonat, Zink-2-ethylcaproat, Zink-diacetat, Bis-(2-Ethylhexansäure)-Zink, Zinkdineodecanoat, Zinkdiundecenoat, Zinkdimethacrylat, Tetrakis-(2-Ethylhexansäure)-zirkoniumdichlorid, Tetrakis-(Methacrylsäure)-zirkoniumdichlorid, Kobaltdiacetat, Bismutcarboxylate und Bismuttriflat, Des Weiteren können auch Eisen(II)- und Eisen(III)-Verbindungen, z. B. Eisen(III)-acetylacetonat oder Eisen(II)-acetat, Aluminiumverbindungen, z. B. Aluminiumacetylacetonat, Calcium-verbindungen, z.B. Calciumethylendiamintetraacetat, Magnesiumverbindungen, z. B. Magnesiumethylendiamintetraacetat als Katalysatoren eingesetzt werden.

Es ist auch vorstellbar, Perfluoralkansulfonsäure, wie beispielweise Trifluormethansulfonsäure oder Perfluorbutansulfonsäure, als Katalysator einzusetzen.

Bevorzugt kann ein erfindungsgemäßer Katalysator, der im Weiteren näher beschrieben und erläutert wird, eingesetzt werden.

Vorzugsweise ist bei der Umsetzung mindestens ein Vernetzer gemäß Formel (IV)

R³ₑSi(OR⁴)_{f} Formel (IV)

worin e größer gleich 0 bis kleiner gleich 2 ist, f größer gleich 2 bis kleiner gleich 4 und die Summe von e + f gleich 4 ist,
R³ = eine gesättigte oder ungesättigte Alkylgruppe bestehend aus 1 bis 8 Kohlenstoffatomen, oder eine organische Gruppierung bestehend aus 1 bis 8 Kohlenstoffatomen und 1 bis 2 Stickstoffatomen oder eine aromatische Gruppierung mit 6 bis 20 Kohlenstoffatomen und
R⁴ = eine Alkyl- oder Acylgruppe bestehend aus 1 bis 8 Kohlenstoffatomen ist, zugegen.

Alkylgruppen sind bevorzugt Methyl-, Ethyl-, Propyl-, Isopropyl-, n-Butyl-, s-Butyl-, t-Butyl-gruppen. Die aromatische Gruppierung ist bevorzugt eine Phenyl-Gruppierung. Bevorzugte Substituenten R³ sind Methyl- oder Phenyl- bzw. Mischungen aus Methyl- und Phenyl-Resten. Bevorzugte Alkylgruppen des Restes R⁴ sind Methyl-, Ethyl-, Propyl-, Isopropyl-, n-Butyl-, s-Butyl-, t-Butyl-Gruppen.

Bevorzugt wird der Vernetzer ausgewählt aus Methyltriacetoxysilan, Ethyltriacetoxysilan, Dimethyldiacetoxysilan, Methyltrimethoxysilan, Methyltriethoxysilan, Vinyltrimethoxysilan, Vinyltriethoxysilan, Tetramethoxysilan, Tetraethoxysilan, Phenyltriethoxysilan, Phenyltrimethoxysilan, Propyltrimethoxysilan, Propyltriethoxysilan, Dimethyldimethoxysilan, Dimethyldiethoxysilan, Dimethoxyphenylmethylsilan und Diethoxyphenylmethylsilan.

Vorteilhafterweise ist es daher mit dem erfindungsgemäßen Verfahren möglich, den Verzweigungsgrad der Kondensationsverbindungen zu erhöhen, indem man
a) verzweigtes Acetoxysiloxan und/oder
b) einen verzweigenden Vernetzer der Reaktionsmatrix,
hinzufügt.

Des Weiteren besteht erfindungsgemäß eine nachgeschaltete Vernetzungsmöglichkeit mit einhergehenden Molmassenaufbau, indem man die verzweigten Kondensationsverbindungen mit zusätzlichen Acetoxysiloxanen zur Reaktion bringt.

Die Begriffe "Siloxane" und "Polysiloxane", ungeachtet als Wortbestandteil oder alleinstehend, werden als Synonyme in der vorliegenden Erfindung verstanden.

Vorzugsweise enthalten die erfindungsgemäßen härtbaren Kondensationsverbindungen den Vernetzer in Mengen von 0 bis 20 Gew.-%, bevorzugt 0 bis 10 Gew.-% und besonders bevorzugt mit 0 bis 5 Gew.-% bezogen auf die gesamte Masse der härtbaren Kondensationsverbindungen.

Wünschenswert ist es des Weiteren auch, ein Verfahren bereitzustellen, mit dem härtbare Kondensationsverbindungen auf Basis von alkoxyfunktionellen Polysiloxanen einfach und ohne die aus dem Stand der Technik bekannte Nachteile herstellen lassen.

Überraschenderweise wurde nun gefunden, dass man sowohl unter Verzicht auf den eingangs erwähnten Einsatz von Organochlorsilanen als auch unter Verzicht auf schwierig steuerbare Alkoholyse/Hydrolyse-Vorgänge einfach und eindeutig zu härtbaren Kondensationsverbindungen auf Basis von alkoxyfunktionellen, =Si-OH-gruppen freien Polysiloxanen gelangt, indem man nicht-endäquilibrierte Acetoxygruppen-tragende Siloxane gemäß Formel (I) mit mindestens einem alkoxyfunktionellen Polysiloxan gemäß der Formel (II) in Gegenwart eines Katalysators zur Reaktion bringt.

Bevorzugt beträgt das Verhältnis von Acetoxygruppen-tragenden Siloxanen gemäß Formel (I) zu alkoxyfunktionellen Polysiloxanen gemäß Formel (II) 1 Gew.-% zu 99 Gew.-%, bis 99 Gew.- % zu 1 Gew.-%, bevorzugt 3 Gew.-% zu 97 Gew.-% bis 50 Gew.-% zu 50 Gew.-%, und besonderes bevorzugt 5 Gew.-% zu 95 Gew.-% bis 30 Gew.-% zu 70 Gew.-%, bezogen auf die Gesamtsilikonmatrix.

Es können alle üblichen Katalysatoren eingesetzt werden. Bevorzugte Katalysatoren sind oben beschrieben.

Weiterhin wurde überraschenderweise gefunden, dass man das erfindungsgemäße Verfahren ganz besonders bevorzugt in Gegenwart eines Silikonmatrix kompatiblen Katalysators durchführt, den man beispielsweise vor Beginn der zu katalysierenden Kondensationsreaktion dadurch gewinnt, dass man Titanalkoholate mit Essigsäureanhydrid oder aber Titanalkoholate mit Acetoxysiloxanen zur Umsetzung bringt.

Reaktionsmatrix und Silikonmatrix werden hier als Synonyme verwendet, die im Wesentlichen aus Verbindungen der Formel (I) und Verbindungen der Formel (II) zusammensetzt.

Insbesondere kann der erfindungsgemäß aus der Reaktion von Titanalkoholaten mit Acetoxysiloxan hervorgehende Katalysator auch bevorzugt in situ hergestellt werden.

Somit stellt die Herstellung des neuartigen Katalysators einen weiteren Gegenstand der Erfindung dar. Der erfindungsgemäße Katalysator kann bevorzugt aus Titanalkoholaten mit Essigsäureanhydrid oder aus Titanalkoholaten mit Acetoxysiloxanen hergestellt werden. Besonders bevorzugt kann man den erfindungsgemäßen Katalysator aus Titanalkoholaten und Acetoxysiloxan in situ, d.h. während der Umsetzung von Verbindungen der Formel (I) mit Verbindungen der Formel (II), herstellen.

Der aus der Reaktion von Titanalkoholaten mit Acetoxysiloxanen hervorgehende Katalysator besitzt eine hervorragende Kompatibilität mit der Reaktionsmatrix und gestattet sowohl die zeitadäquat-zügige Reaktion von Alkoxypolysiloxanen mit Acetoxysiloxanen als auch die Aushärtung der hieraus hervorgehenden härtbaren Kondensationsverbindungen an gewöhnlicher Atmosphäre.

Gemäß einer bevorzugten Ausgestaltungsvariante können erfindungsgemäß zunächst Acetoxysiloxan und alkoxyfunktionelles Polysiloxan vorvermischt und dann mit Titanalkoholat und/oder besonders bevorzugt mit dem aus der Reaktion von Acetoxysiloxan mit Titanalkoholat hervorgegangenen Kondensations-Katalysator beaufschlagt werden.

Alternativ bevorzugt kann erfindungsgemäß der Silikonmatrix kompatible Kondensationskatalysator durch Vermischen und Vorreaktion von Acetoxysiloxan mit Titanalkoholat hergestellt werden. Durch Hinzufügen des alkoxyfunktionellen Polysiloxans entsteht dann die kondensationsfähige Reaktionsmatrix.

Im Rahmen vorliegender Erfindung wird die Kompatibilität des Kondensationskatalysators anhand des Auftretens bzw. Nichtauftretens von Trübungen nach Einbringen desselben in die bzw. nach dessen in-situ-Bildung in der Reaktionsmatrix festgemacht. Wird ein zu diesem Zweck aus der Reaktionsmatrix entnommenes Volumen-Aliquot in eine 10 mm dicke Glasküvette eingebracht und lässt sich dann ein unmittelbar dahinter liegender Text (schwarz geschrieben in der Größe Arial 12 auf weißem Papier) bei Tages- und/ oder Kunstlicht unverzerrt lesen, so gilt die Reaktionsmatrix als trübungsfrei und der Kondensationskatalysator als erfindungsgemäß kompatibel.

In einer weiteren, bevorzugten erfindungsgemäßen Ausgestaltung werden Acetoxysiloxan, Alkoxypolysiloxan und Titanalkoholat unter intensiver Durchmischung zur Reaktion gebracht.

Erfindungsgemäß können alle genannten Katalysatoren in Mengen von 0,01 bis 10,0 Gew.-%, bevorzugt von 0,05 bis 7,5 Gew.-%, besonders bevorzugt 0,1 bis 5,0 Gew.-% bezogen auf die aus Alkoxypolysiloxan und Acetoxysiloxan bestehende Reaktionsmatrix eingesetzt werden.

Die für das erfindungsgemäße Verfahren verwendeten alkoxyfunktionellen Polysiloxanen gemäß Formel (II) und endäquilibrierten Acetoxygruppen-tragenden Siloxanen gemäß Formel (I) inklusive deren bevorzugten Ausführungsformen sind oben näher beschrieben.

Erfindungsgemäß kann man bevorzugt zur Vervollständigung der Kondensationsreaktion während der Umsetzung den aus dem Rest R² und der Acetoxygruppe gebildeten Essigsäureester entfernen. Die Entfernung des aus der Reaktionsmatrix freigesetzten Essigsäureesters kann bei Normaldruck oder besonders bevorzugt bei Unterdruck, das heißt, unter Anlegen eines Hilfsvakuums erfolgen. Weitere Möglichkeiten sind dem Fachmann bekannt.

Erfindungsgemäß kann man bevorzugt die Kondensationsreaktion von alkoxyfunktionellen Polysiloxanen mit Acetoxysiloxanen wahlweise in Substanz, das heißt, ohne Einsatz von Lösungsmitteln, jedoch auch in Lösung durchführen. Als Lösungsmittel eignen sich beispielsweise Aromaten, Alkylaromaten aber auch aliphatische Kohlenwasserstoffe.

Bevorzugt werden Lösungsmittel eingesetzt, die einen Siedepunkt aufweisen, der höher liegt als der Siedepunkt des aus der Kondensationsreaktion freigesetzten Essigsäureesters, gebildet aus dem Rest R² und der Acetoxygruppe.

Kondensationsreaktion und Umsetzung werden hierbei als Synonyme verwendet.

Bevorzugt wird ein Vernetzer der Formel (IV) eingesetzt. Bevorzugte Vernetzerverbindungen sind oben beschrieben.

Es ist vorstellbar, dass der Vernetzer als Mischung bestehend aus mindestens zwei Vernetzern verwendet wird. Als Beispiel kann eine Mischung aus Phenyltrimethoxysilan und Methyl-Phenyl-Dimethoxysilan als Monomerblend im Sinne der vorliegenden Erfindung verwendet werden.

Die ²⁹Si-NMR-Spektroskopie, ergänzt um die GPC, kann zur Reaktionsverfolgung herangezogen werden. Besonders die ²⁹Si-NMR-Spektroskopie ermöglicht über die Verfolgung des charakteristischen Signals für die Si-Acetoxygruppierung die Umsatzkontrolle.

Das Verschwinden des für Acetoxysiloxane typischen ²⁹Si-NMR-Signals bei -9 ppm als verlässlichen Indikator für eine vollständige Umsetzung nehmend, beispielsweise erreichen die in den Beispielen gezeigten erfindungsgemäßen Reaktionsansätze nach 1 bis 3 Stunden quantitativen Umsatz.

Die erfindungsgemäß gewonnenen härtbaren Kondensationsverbindungen besitzen den großen Vorteil, dass sie keinerlei Anteile =Si-OH-Gruppen tragender Siloxane enthalten. Die insbesondere von der erhöhten Präsenz von =Si-OH-Gruppen in alkoxyfunktionellen Polysiloxanen ausgehenden Defizite sind bereits beispielsweise hinlänglich in der WO 2014/187972 und dort speziell für hyperverzweigte Polyalkoxysilan Additive bezugnehmend auf den Aspekt deren mangelnden Lagerstabilität (S. 8,) als auch in der Patentschrift EP 0771835 B1 im Sinne ihrer mangelnder Lagerstabilität (S. 4, Zeilen 29-30) und in der EP 0964020 B1 bezugnehmend auf die unzureichende Fleckbeständigkeit bei Verarbeitung des alkoxyfunktionellen Polysiloxans in einer Beschichtungsmasse (S. 3, [0026]) diskutiert.

Die erfindungsgemäß härtbaren Kondensationsverbindungen sind vorzugsweise klare bis leicht trübe Flüssigkeiten, die gegenüber den eingesetzten Ausgangsmaterialien (Formel (I) und Formel (II)) einen deutlichen Molmassenaufbau aufweisen, den man leicht mit Hilfe der GPC-Analytik nachvollziehen kann.

Es wurde auch festgestellt, dass die erfindungsgemäßen härtbaren Kondensationsverbindungen aufgrund im System verbliebener Katalysatorkomponente einen gewissen Selbsthärtungscharakter ("1-K-Charakter") besitzen.

Sollten darüber hinaus noch schnellere An- und Durchtrocknungszeiten gewünscht sein, empfiehlt sich die Zugabe weiterer Härtungskatalysatoren. Übliche Härtungskatalysatoren sind dem Fachmann bekannt. Beispielsweise werden hier einige aufgeführt: 3-Aminopropyltriethoxsilan, 3-Aminopropyltrimethoxysilan, Tetra(i-Propyl)titanat, Tetra(n-Butyl)titanat, 1,1,3,3-Tetramethylguanidin, 1,8-Diazabicyclo[5.4.0]undec-7-ene, 1,5-Diazabicyclo[4.3.0]non-5-ene und Dioctylzinndilaurat.

Ein weiteres Ziel der vorliegenden Erfindung bestand darin, Beschichtungsmittel mit Antigraffiti-Wirkung zur Verfügung zu stellen, die die Eigenschaften des Substrats nicht ungünstig verändern. So sollen die zur Herstellung von Graffiti verwendeten Lacke oder Farben durch eine erfindungsgemäße Beschichtung mit Anti-Graffiti-Wirkung nicht mehr oder nur sehr schwach auf dem Substrat haften, wobei besprühte Substrate leicht zu reinigen sein sollten, so dass z.B. Wasser, Lappen, Tenside, Hochdruckreiniger, milde Lösemittel ("Easyto-clean") genügen. Eine aufwendige Reinigungsprozedur, wie aus dem Stand der Technik bekannt, soll weitestgehend vermieden werden.

Völlig überraschend konnte festgestellt werden, dass die erfindungsgemäßen Beschichtungen mehrere Reinigungszyklen überstehen, ohne dass sie beispielsweise ihre Anti-Graffiti-Wirkung verlieren. Somit sind die erfindungsgemäßen Beschichtungen in ihrer technischen Lebensdauer gegenüber denen aus dem Stand der Technik weit überlegen. Der Anwender beispielsweise muss nicht nach jedem Reinigungsprozess eine neue schützende Schicht auftragen, was ein wirtschaftlicher Vorteil bedeutet.

Überraschenderweise weisen beschichtete Produkte mit einer Beschichtung enthaltend der erfindungsgemäßen härtbaren Kondensationsverbindungen Anti-Adhäsiv-Eigenschaften, Anti-Graffiti-Eigenschaften, Anti-Friction-Eigenschaften, hydrophoben Eigenschaften und/oder Antifouling Eigenschaften auf.

Die Verwendung der erfindungsgemäßen härtbaren Kondensationsverbindungen zur Herstellung von Beschichtungen mit Anti-Adhäsiv-Eigenschaften, Anti-Graffiti-Eigenschaften, Anti-Friction-Eigenschaften, hydrophoben Eigenschaften und/oder Antifouling Eigenschaften ist auch Gegenstand dieser Erfindung.

Auch sind Beschichtungen, Lacke, Farben, Tinten, Überzüge, Dichtungsmassen und Klebstoffe erhältlich durch Verwendung der erfindungsgemäßen härtbaren Kondensationsverbindungen ein weiterer Gegenstand der Erfindung.

Dem Fachmann ist bekannt, dass Beschichtungen auch Adhesionspromotoren wie beispielsweise Aminosilanen, UV-Stabilisatoren, Füllstoffe, Pigmente, Thixotropiermittel wie beispielsweise pyrogene Kieselsäure, Reaktivverdünner oder Vernetzer wie beispielsweise Silanen, Lösemittel wie beispielsweise Xylol, Verlaufsmittel, Entschäumer oder Beschleuniger enthalten können.

Nachstehend soll die Erfindung anhand von Ausführungsbeispielen näher erläutert werden.

### Methoden

### Kernspinresonanz (NMR)

Die NMR-Spektren werden gemessen mit Hilfe eines Avance III 400 Spektrometers der Fa. Bruker. ²⁹Si-NMR Spektren werden gemessen mit einem PA BBO 400Si BB-H-D-10 z Probenkopf der Fa. Bruker, bei einer Frequenz von 79,495 MHz. Die Messzeit betrug 2,569 Sekunde pro Scan, bei 512 Scans pro Spektrum.

### Gelpermeationchromatographie (GPC)

Molmassen und -verteilung werden nach DIN 55672-1 bestimmt. Bei dem beschriebenen Verfahren handelt es sich nicht um ein Absolutverfahren. Vielmehr ist eine Kalibrierung, die mit kommerziell verfügbaren, linear aufgebauten und nach unabhängigen Absolutverfahren charakterisierten Polystyrol-Standards durchgeführt wird, notwendig. Instrument: Agilent 1100 von Agilent Technologie, Säulenkombination: SDV 1000/10000Ä, Länge 65,00 cm, Temperatur 30 °C, Tetrahydrofuran als mobile Phase, Fließrate 1ml/min, Probenkonzentration 10 g/l. RI Detektor, Auswertung gegen einen Polystyrolstandard im Molmassenbereich von 162 - 2,520,000 g.mol⁻¹.

### Anti-Graffiti-Wirkung

a) Die Anti-Graffiti-Wirkung wird angelehnt an ASTM D7089-06 bestimmt. Die erfindungsgemäßen Kondensationsverbindungen wurden mit Hilfe eines 100 µm-Spiralrakels auf Aluminium Q-Panele aufgetragen. Die beschichteten Bleche wurden 24 Stunden lang getrocknet.

Dann wurden die Bleche zur Hälfte mit Hilfe einer Spraydose mit einem handelsüblichen, Blau pigmentierten Nitrocelluloselack (FLT Handel & Service GmbH) lackiert und 24 Stunden lang getrocknet. Anschließend wurden die beschichteten Bleche mit der blauen Lackfarbe mit Hilfe eines Wasserstrahls, der mit einem Druck von 5 bar einwirkt, beaufschlagt, bis sich der blaue Lack vollständig entfernen lässt. Üblicherweise beträgt die Dauer maximal 5 Minuten. Kleine Farbreste an den Rändern der Bleche werden hierbei vernachlässigt.

Es wird hier überprüft, ob die Beschichtung eine Anti-Graffiti-Wirkung aufzeigt oder nicht.
b) Die Bleche, die diesen ersten Zyklus überstanden haben, wurden erneut getrocknet und nochmals mit der Spraydose lackiert und getrocknet. Die Prüfung wurde entsprechend mit dem Wasserstrahl so oft wiederholt, bis die blaue Lackschicht sich nicht mehr entfernen lässt.

Die Anzahl der Zyklen zeigt an, wie oft eine Beschichtung das Reinigungsprozedere überstanden hat, bis sie keine Anti-Graffiti-Wirkung mehr aufweist.

Je mehr Reinigungszyklen eine Beschichtung aufweist, desto wirtschaftlicher ist sie.

### Gleitwiderstandswert G (cN)

Zur Messung der Gleitfähigkeit hat sich eine Prüfmethode bewährt, bei der die Reibungskraft gemessen wird. Die Methode wird mittels eines Bluehillgeräts der Firma Instron durchgeführt.

Hierbei wird ein 500 g-Gewichtsstein mit definierter Filzunterlage von einer Zugmaschine gleichmäßig über die Lackoberfläche gezogen. Die dazu benötigte Kraft wird mit einem elektronischen Kraftaufnehmer gemessen. Die Prüfung wird bei konstanter Geschwindigkeit von 12 mm/sec durchgeführt und erlaubt eine reproduzierbare Messung mit hoher Genauigkeit. Für die Prüfung wurde eine erfindungsgemäße Beschichtungszusammensetzung enthaltend erfindungsgemäße Kondensationsverbindungen mit Hilfe eines 100 µm Spiralrakels auf Aluminium Q-Panele aufgetragen und für 24h getrocknet.

Je kleiner der Gleitwiderstandswert G (cN) ist, desto höher ist die Gleitfähigkeit der Beschichtungsoberfläche.

### Kontaktwinkel

Der Kontaktwinkel von Wasser wird nach DIN 55660 bestimmt. Messungen wurden mit Hilfe eines Kontaktwinkelmessgeräts OCA 20 (Firma DataPhysics Instruments GmbH) unter Zuhilfenahme der Software SCA 20 vom selben Hersteller durchgeführt. Dabei wurden beschichtete Aluminiumprüfbleche in das Kontaktwinkelmessgerät eingespannt und Tropfen voll-entionisiertem Wasser von 5 µL auf die Beschichtung aufgetropft. Der Kontaktwinkel wurde mittels der Software nach einer Minute Wartezeit gemessen. Für die Prüfung wurde eine erfindungsgemäße Beschichtungszusammensetzung enthaltend erfindungsgemäße Kondensationsverbindungen mit Hilfe eines 100 µm Spiralrakels auf Aluminium Q-Panele aufgetragen und für 24 Stunden lang getrocknet.

### Kompatibilität des erfindungsgemäßen Katalysators

Erfindungsgemäß wird die Kompatibilität des Kondensationskatalysators anhand des Auftretens bzw. Nichtauftretens von Trübungen nach Einbringen desselben bzw. nach dessen in-situ-Bildung in der Reaktionsmatrix festgemacht.

Wird ein zu diesem Zweck aus der Reaktionsmatrix entnommenes Aliquot in eine 10 mm dicke Glasküvette eingebracht und lässt sich dann ein unmittelbar dahinter liegender Text (Schriftart: Arial, Schriftschnitt: Standard, Schriftfarbe: schwarz auf weißem Papier) bei Tages- und/ oder Kunstlicht unverzerrt lesen, so gilt die Reaktionsmatrix als trübungsfrei und der Katalysator als erfindungsgemäß kompatibel.

### Weitere Bedingungen

Werden im Rahmen der vorliegenden Erfindung %-Angaben gemacht, so handelt es sich, wenn nicht anderes angegeben, um Angaben in Gewichts-%. Bei Zusammensetzungen beziehen sich die Prozentangaben, sofern nicht anders definiert, auf die Gesamtzusammensetzung. Werden in den nachfolgenden Beispielen Mittelwerte genannt, so handelt es sich, wenn Nichts anderes angegeben, um Zahlenmittel. Werden nachfolgend Messwerte angegeben, so sind diese, sofern nicht anders definiert, bei einem Druck von 101325 Pa, einer Temperatur von 21 °C und der umgebenden relativen Luftfeuchtigkeit von ca. 40 % ermittelt. Werden nachfolgend Beschichtungen getrocknet, so geschieht dies, sofern nicht anders definiert, ebenfalls bei einem Druck von 101325 Pa, einer Temperatur von 21 °C und der umgebenden relativen Luftfeuchtigkeit von ca. 40 %.

### Materialien und Geräte

- Essigsäureanhydrid, Fa. Merck
- PDM-Siloxan, Fa. Wacker
- Tetra-n-Butyltitanat, Fa. ABCR
- Tetra-i-Propyltitanat, Fa. ABCR
- Toluol, Fa. Reininghaus Chemie
- Natriumhydrogencarbonat, Fa. Sigma-Aldrich
- Silikophen AC1000 (Poly(methyltrimethoxysilan)), Fa. Evonik Industries
- Rotationsverdampfer Rotavapor R-300, Fa. Büchi
- Ölbad Rotavapor B-300 Base, Fa. Büchi
- Q-Panels Aluminium, 6"x3", Fa. Q-Lab
- Buntsprühlack seidenmatt blau, FLT Handel & Service GmbH

### Beispiele

### 1. Herstellung der erfindungsgemäßen härtbaren Kondensationsverbindungen

### 1.1 Herstellung eines linearen α,ω-Diacetoxysiloxan

In einem 1L-Vierhalsrundkolben mit KPG-Rührer, Innenthermometer und aufgesetztem Rückflusskühler werden 650,0 g PDM-Siloxan mit einem Molekulargewicht von 2543 g/mol mit 52,18 g Essigsäureanhydrid (0,51 mol) unter Rühren bei 23°C vorgelegt. Anschließend wird das Gemisch auf 150°C aufgeheizt und 6 Stunden bei Reaktionstemperatur gehalten. Nach der Reaktionszeit wird der Reaktionsansatz auf 80°C abgekühlt.

Um das Reaktionsgemisch aufzuarbeiten, wird der Rückflusskühler durch eine Destillationsbrücke ausgetauscht. Das Reaktionsgemisch wird während 2 Stunden unter Vakuum (20 mbar) bei 80 °C destilliert. Anschließend wurde der Reaktionsansatz mit 14,04 g Natriumhydrogencarbonat neutralisiert. Nach 12 Stunden des Nachrührens ließ man das Produkt auf Raumtemperatur abkühlen und trennte die Feststoffanteile durch Filtration über einen Faltenfilter ab. Erhalten wird ein klares terminales Acetoxygruppen-tragendes Polysiloxan.

### 1.2 Umsetzung des linearen α,ω-Diacetoxysiloxans mit einem alkoxyfunktionellen Polysiloxan

### Beispiel 1 (erfindungsgemäß)

In einem 1 L-Einhalsrundkolben werden 309,6 g Silikophen AC1000, 31,2 g α,ω-Diacetoxysiloxan und 1,8 g Tetra-n-Butyltitanat abgewogen. Ein der homogenen Reaktionsmatrix entnommenes Aliquot wurde in eine 10 mm dicke Glasküvette eingebracht und ein unmittelbar dahinter liegender Text (Schriftart: Arial, Schriftschnitt: Standard, Schriftfarbe: schwarz auf weißem Papier) ließ sich bei Kunstlicht unverzerrt lesen, so dass die Reaktionsmatrix als trübungsfrei und der Katalysator als erfindungsgemäß kompatibel beurteilt wurden. Nach Wiedereinbringen des Probevolumens in den Reaktionsansatz wird dieser am Rotationsverdampfer (Büchi Rotavapor R-300) bei 130°C Heizbadtemperatur (Büchi Rotavapor B-300 Base) zunächst für eine Stunde bei 100 UpM und Umgebungsdruck vermischt. Für die Dauer von 2 Stunden wird zunächst ein Hilfsvakuum von 600 mbar und dann für die Dauer von 2 weiteren Stunden ein Hilfsvakuum von 100 mbar angelegt. Das bei der Reaktion entstehende Methylacetat wird in einem Auffangkolben gesammelt. Ein ²⁹Si-NMR-Spektrum des Endproduktes zeigt durch das Verschwinden des Signals bei -9 ppm, dass die aus α,ω-Diacetoxysiloxan stammenden, endständigen Acetoxygruppen vollständig umgesetzt wurden. Ein GPC weist ein zahlenmittleres Molekulargewicht Mₙ von 847 g/ mol und ein gewichtsmittleres Molekulargewicht M_{w} von 2.971 g/mol aus, und belegt somit einen deutlichen Molekulargewichtsaufbau gegenüber dem Ausgangsmaterial Silikophen AC1000 (Mₙ 586 und M_{w} 859 g/ mol).

### Beispiel 2 (erfindungsgemäß)

Es wurde eine Katalysatorlösung, bestehend aus 0,81 g Tetra-i-Propyltitanat, 0,30 g Essigsäureanhydrid und 1,69 g Toluol, hergestellt. Nach Abklingen der Exothermie ist die so gewonnene klare Katalysatorlösung direkt einsetzbar.

In Analogie zum Beispiel 1 werden in einem 500 ml-Einhalsrundkolben 94,9 g Silikophen AC1000, 9,5 g α,ω-Diacetoxysiloxan und 0,9 g Katalysatorlösung abgewogen. Ein der homogenen Reaktionsmatrix entnommenes Aliquot wurde in eine 10 mm dicke Glasküvette eingebracht und ein unmittelbar dahinter liegender Text (Schriftart: Arial, Schriftschnitt: Standard, Schriftfarbe: schwarz auf weißem Papier) ließ sich bei Kunstlicht unverzerrt lesen, so dass die Reaktionsmatrix als trübungsfrei und der Katalysator als erfindungsgemäß kompatibel beurteilt wurden. Nach Wiedereinbringen des Probevolumens in den Reaktionsansatz wird dieser am Rotationsverdampfer auf 130 °C erhitzt und zur Umsetzung gebracht. Ein ²⁹Si-NMR-Spektrum des Endproduktes zeigt durch das Verschwinden des Signals bei -9 ppm, dass die aus α,ω-Diacetoxysiloxan stammenden, endständigen Acetoxygruppen vollständig umgesetzt wurden. Ein GPC weist ein zahlenmittleres Molekulargewicht Mₙ von 905 g/ mol und ein gewichtsmittleres Molekulargewicht M_{w} von 3.021 g/mol aus, und belegt somit einen deutlichen Molekulargewichtsaufbau gegenüber dem Ausgangsmaterial Silikophen AC1000 (Mₙ 586 und M_{w} 859 g/ mol).

### 2. Anwendungstechnische Prüfung

### 2.1 Anti-Graffiti-Wirkung

Die mit den erfindungsgemäßen härtbaren Kondensationsverbindungen (Beispiele 1 und 2) beschichteten Bleche wurden zur Bestimmung der Anti-Graffiti-Eigenschaft herangezogen. Beide Beispiele härteten ohne den Zusatz von Härtungskatalysatoren. Als Vergleichsbeispiel VG wurde Silikophen AC1000 auf die Bleche appliziert und mit 1,5 Gew.-% Tetra-n-Butyltitanat (TnBT) bezogen auf die gesamte Menge des Harzes ebenfalls ausgehärtet. Die Ergebnisse sind in Tabelle 1 aufgeführt. Es zeigte sich, dass Vergleichsbeispiel VG keine Anti-Graffiti-Wirkung aufweist, da die aufgesprühte Lackschicht sich nicht entfernen ließ. Die erfindungsgemäßen Beschichtungen dagegen wiesen eine Anti-Graffiti-Wirkung auf.

**Tabelle 1: Anti-Graffiti-Wirkung**

| **Beispiel** | **Anti-Graffiti-Wirkung** | **Zyklen** |
|---|---|---|
| 1 | ja | 2 |
| 2 | ja | 2 |
| VG | nein | 0 |

### 2.2 Gleitfähigkeit

Als Vergleichsbeispiel VG wurde Silikophen AC1000 auf das Blech appliziert und mit Hilfe von 1,5 Gew.-% Tetra(n-Butyl)titanat bezogen auf die gesamte Menge des Harzes ausgehärtet. Die Ergebnisse sind in der Tabelle 2 zusammengefasst. Es zeigt sich, dass die erfindungsgemäßen Beschichtungen verglichen mit dem Vergleichsbeispiel VG einen erheblich reduzierten Gleitwert haben. Die Gleitfähigkeit der erfindungsgemäßen Beschichtungen sind daher besser als die des Vergleichsbeispiels.

**Tabelle 2: Gleitwerte**

| **Beispiel** | **Gleitwert / cN** |
|---|---|
| 1 | 70 |
| 2 | 65 |
| VG | 229 |

### 2.3 Kontaktwinkel

Als Vergleichsbeispiel VG wurde Silikophen AC1000 auf das Blech appliziert und mit Hilfe von 1,5 Gew.-% Tetra(n-Butyl)titanat bezogen auf die gesamte Menge des Harzes ausgehärtet.

Die Ergebnisse sind in der Tabelle 3 zusammengefasst. Es zeigt sich, dass die erfindungsgemäßen Beschichtungen verglichen mit dem Vergleichsbeispiel VG einen höheren Kontaktwinkel aufweisen. Die erfindungsgemäßen Beschichtungen 1 und 2 weisen einen Kontaktwinkel > 90° auf, somit sind sie hydrophob; das Eindringen von Wasser durch eine Lackoberflächenbeschädigung in das Substrat wird daher erschwert, im Gegensatz zum Vergleichsbeispiel VG, das einen Kontaktwinkel < 90° beträgt und daher hydrophil ist.

**Tabelle 3: Kontaktwinkel**

| **Beispiel** | **Kontaktwinkel / °** |
|---|---|
| 1 | 101 |
| 2 | 102 |
| VG | 78 |

## Patentansprüche

1. Härtbare Kondensationsverbindungen erhältlich durch die Umsetzung von
- Acetoxygruppen-tragenden Siloxanen gemäß Formel (I): 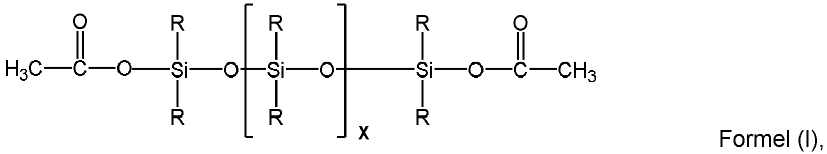
wobei R = ein Alkylrest mit 1 bis 4 Kohlenstoffatomen und/oder Phenylrest, bevorzugt R = Methylrest und 1 ≤ x ≤ 500, bevorzugt 3 ≤ x ≤ 100, besonders bevorzugt 5 ≤ x ≤ 50 ist,
wobei die Acetoxygruppen-tragenden Siloxane gemäß Formel (I) nicht endäquilibriert sind,
- mit mindestens einem alkoxyfunktionellen Polysiloxan gemäß der Formel (II)
R¹_{c}Si(OR²)_{d}O_{(4-c-d)/2} Formel (II)
worin c größer gleich 0 bis kleiner gleich 2 und d größer gleich 0 bis kleiner gleich 4 sind und die Summe von c + d kleiner 4 ist,
R¹ unabhängig voneinander, gleich oder verschieden lineare oder verzweigte, gesättigte wie auch ein oder mehrfach ungesättigte oder aromatische Kohlenwasserstoffreste, und
R² eine Alkylgruppe bestehend aus 1 bis 8 Kohlenstoffatomen, bevorzugt eine Methyl- oder Ethylgruppe, ist
- in Gegenwart eines Katalysators.

2. Kondensationsverbindungen nach Anspruch 1, **dadurch gekennzeichnet, dass** die nicht-endäquilibrierten Acetoxygruppen-tragenden Siloxane gemäß Formel (I) durch die Umsetzung von linearen α,ω-Hydroxygruppen-tragenden Polysiloxanen mit Essigsäureanhydrid erhältlich sind.

3. Kondensationsverbindungen nach einem der vorgenannten Ansprüche, **dadurch gekennzeichnet, dass** bei der Umsetzung mindestens ein Vernetzer gemäß Formel (IV)
R³ₑSi(OR⁴)_{f} Formel (IV)
worin e größer gleich 0 bis kleiner gleich 2 ist, f größer gleich 2 bis kleiner gleich 4 und die Summe von e + f gleich 4 ist,
R³ = eine gesättigte oder ungesättigte Alkylgruppe bestehend aus 1 bis 8 Kohlenstoffatomen oder eine aromatische Gruppierung mit 6 bis 20 Kohlenstoffatomen und
R⁴ = eine Alkyl- oder Acylgruppe bestehend aus 1 bis 8 Kohlenstoffatomen ist, zugegen ist.

4. Kondensationsverbindungen nach einem der vorgenannten Ansprüche, **dadurch gekennzeichnet, dass** Acetoxygruppen-tragende Siloxane gemäß Formel (I) ausschließlich D-Einheiten aufweisen.

5. Kondensationsverbindungen nach einem der vorgenannten Ansprüche, **dadurch gekennzeichnet, dass** α,ω-Acetoxygruppen-tragende, lineare Polydimethylsiloxane für die Umsetzung eingesetzt werden.

6. Kondensationsverbindungen nach einem der vorgenannten Ansprüche, **dadurch gekennzeichnet, dass** das alkoxyfunktionelle Polysiloxan Reste R¹ = Methyl- und/oder Phenylreste aufweist.

7. Kondensationsverbindungen nach einem der vorgenannten Ansprüche, **dadurch gekennzeichnet, dass** das gewichtsmittlere Molekulargewicht der alkoxyfunktionellen Polysiloxane 200 bis 20.000 g/mol, bevorzugt 200 bis 10.000 g/mol, besonders bevorzugt 300 bis 3.000 g/mol und weiter besonders bevorzugt 400 bis 2.000 g/mol ist.

8. Kondensationsverbindungen nach einem der vorgenannten Ansprüche, **dadurch gekennzeichnet, dass** die Alkoxyfunktionalität der alkoxyfunktionellen Polysiloxane von 50 bis 3 Gew.-%, bevorzugt 40 bis 5 Gew.-%, und besonders bevorzugt 30 bis 7 Gew.- %, bezogen auf die Gesamtmasse der Harzkomponente.

9. Kondensationsverbindungen nach einem der vorgenannten Ansprüche, **dadurch gekennzeichnet, dass** der Katalysator ausgewählt ist aus Zinndiacetat, Zinndioctoat, Dibutylzinndiacetylacetonat, Dibutylzinndilaurat, Zinntetraacetat, Dibutylzinndiacetat, Dibutylzinndioctoat, Dibutylzinndioleat, Dimethoxydibutylzinn, Dimethylzinn, Dibutylzinnbenzylmaleat, Bis-(triethoxysiloxy)dibutylzinn, Diphenylzinndiacetat, Dioctylzinndilaurat, Dioctylzinndineodecanoat, Tetraethoxy-titan, Tetra-n-propoxy-titan, Tetra-i-propoxy-titan, Tetra-n-butoxytitan, Tetra-i-butoxytitan, Tetrakis-(2-ethylhexoxy)titan, Di-i-propoxy-bis(ethylacetoacetat)titan, Dipropoxy-bis-(acetylacetonat)-titan, Di-i-propoxy-bis-(acetylacetonat)-titan, Dibutoxy-bis-(acetylacetonat)-titan, Tri-i-acetat-propoxyallyltitan, Isopropoxyoctylenglycol- oder Bis(acetylacetonat)-titanoxid, Bleidiacetat, Blei-di-2-ethylhexanoat, Blei-dineodecanoat, Bleitetraacetat, Bleitetrapropionat, Zinkacetylacetonat, Zink-2-ethylcaproat, Zinkdiacetat, Bis-(2-Ethylhexansäure)-Zink, Zinkdineodecanoat, Zinkdiundecenoat, Zinkdimethacrylat, Tetrakis-(2-Ethylhexansäure)-zirkoniumdichlorid, Tetrakis-(Methacrylsäure)-zirkoniumdichlorid, Kobaltdiacetat, Bismutcarboxylate, Bismuttriflat.

10. Kondensationsverbindungen nach einem der vorgenannten Ansprüche, **dadurch gekennzeichnet, dass** der Vernetzer ausgewählt ist aus Methyltriacetoxysilan, Ethyltriacetoxysilan, Dimethyldiacetoxysilan, Methyltrimethoxysilan, Methyltriethoxysilan, Vinyltrimethoxysilan, Vinyltriethoxysilan, Tetramethoxysilan, Tetraethoxysilan, Phenyltriethoxysilan, Phenyltrimethoxysilan, Propyltrimethoxysilan, Propyltriethoxysilan, Dimethyldimethoxysilan, Dimethyldiethoxysilan, Dimethoxyphenylmethylsilan und Diethoxyphenylmethylsilan.

11. Verfahren zur Herstellung der Kondensationsverbindungen nach einem der Ansprüche 1 - 10, **dadurch gekennzeichnet, dass** man nicht-endäquilibrierte Acetoxygruppen-tragenden Siloxane gemäß Formel (I) mit mindestens einem alkoxyfunktionellen Polysiloxan gemäß der Formel (II) in Gegenwart eines Katalysators zur Reaktion bringt.

12. Verfahren nach Anspruch 11, **dadurch gekennzeichnet, dass** das Verhältnis von Acetoxygruppen-tragenden Siloxanen gemäß Formel (I) zu alkoxyfunktionellen Polysiloxanen gemäß Formel (II) 1 zu 99 bis 99 zu 1 Gew.-%, bevorzugt 3 zu 97 bis 50 zu 50 Gew.-%, und besonderes bevorzugt 5 zu 95 bis 30 zu 70 Gew.-%, bezogen auf die Gesamtsilikonmatrix, beträgt.

13. Verfahren nach einem der Ansprüche 11 - 12, **dadurch gekennzeichnet, dass** der Katalysator in situ oder vor der Umsetzung, bevorzugt aus einer Lewissäure wie einem Titanalkoholat und einem Anhydrid wie Essigsäureanhydrid, gebildet wird.

14. Verfahren nach einem der Ansprüche 11 - 13, **dadurch gekennzeichnet, dass** die Acetoxygruppen-tragende Siloxane D-Einheiten aufweisen.

15. Verfahren nach einem der Ansprüche 11 - 14, **dadurch gekennzeichnet, dass** nicht-endäquilibrierte α,ω-Acetoxygruppen-tragende lineare Polydimethylsiloxane eingesetzt werden.

16. Verfahren nach einem der Ansprüche 11 - 15, **dadurch gekennzeichnet, dass** alkoxyfunktionelle Polysiloxane mit Reste R¹ = Methyl- und/oder Phenylreste eingesetzt werden.

17. Verfahren nach einem der Ansprüche 11 - 16, **dadurch gekennzeichnet, dass** die Alkoxyfunktionalität der alkoxyfunktionellen Polysiloxane von 50 bis 3 Gew.-%, bevorzugt 40 bis 5 Gew.-%, und besonders bevorzugt 30 bis 7 Gew.-%, bezogen auf die Gesamtmasse der Harzkomponente beträgt.

18. Verfahren nach einem der Ansprüche 11 - 17, **dadurch gekennzeichnet, dass** der Katalysator ausgewählt ist aus Zinndiacetat, Zinndioctoat, Dibutylzinndiacetylacetonat, Dibutylzinndilaurat, Zinntetraacetat, Dibutylzinndiacetat, Dibutylzinndioctoat, Dibutylzinndioleat, Dimethoxydibutylzinn, Dimethylzinn, Dibutylzinnbenzylmaleat, Bis(triethoxysiloxy)dibutylzinn, Diphenylzinndiacetat, Dioctylzinndilaurat, Dioctylzinndineodecanoat, Tetraethoxy-titan, Tetra-n-propoxy-titan, Tetra-i-propoxy-titan, Tetra-n-butoxytitan, Tetra-i-butoxytitan, Tetrakis-(2-ethylhexoxy)titan, Di-i-propoxy-bis(ethylacetoacetat)titan, Dipropoxy-bis-(acetylacetonat)-titan, Di-i-propoxy-bis-(acetylacetonat)-titan, Dibutoxy-bis-(acetylacetonat)-titan, Tri-i-acetat-propoxyallyltitan, Isopropoxyoctylenglycol- oder Bis(acetylacetonat)-titanoxid, Bleidiacetat, Blei-di-2-ethylhexanoat, Blei-dineodecanoat, Bleitetraacetat, Bleitetrapropionat, Zinkacetylacetonat, Zink-2-ethylcaproat, Zinkdiacetat, Bis-(2-Ethylhexansäure)-Zink, Zinkdineodecanoat, Zinkdiundecenoat, Zinkdimethacrylat, Tetrakis-(2-Ethylhexansäure)-zirkoniumdichlorid, Tetrakis-(Methacrylsäure)-zirkoniumdichlorid, Kobaltdiacetat, Bismutcarboxylate, Bismuttriflat

19. Verfahren nach einem der Ansprüche 11 -18, **dadurch gekennzeichnet, dass** mindestens ein Vernetzer gemäß Formel (IV) eingesetzt wird.

20. Verfahren nach einem der Ansprüche 11 - 19, **dadurch gekennzeichnet, dass** der Vernetzer ausgewählt ist aus Methyltriacetoxysilan, Ethyltriacetoxysilan, Dimethyldiacetoxysilan, Methyltrimethoxysilan, Methyltriethoxysilan, Vinyltrimethoxysilan, Vinyltriethoxysilan, Tetramethoxysilan, Tetraethoxysilan, Phenyltriethoxysilan, Phenyltrimethoxysilan, Propyltrimethoxysilan, Propyltriethoxysilan, Dimethyldimethoxysilan, Dimethyldiethoxysilan und Dimethoxyphenylmethylsilan.

21. Verfahren nach einem der Ansprüche 11 - 20, **dadurch gekennzeichnet, dass** man während der Umsetzung den aus dem Rest R² und der Acetoxygruppe gebildeten Essigsäureester entfernt.

22. Verfahren nach Anspruch 21, **dadurch gekennzeichnet, dass** man der Reaktion den gebildeten Essigsäureester durch Destillation und/oder gegebenenfalls unter Anlegen eines Hilfsvakuums entfernt.

23. Verfahren nach einem der Ansprüche 11 - 22, **dadurch gekennzeichnet, dass** es sich hierbei um eine vollständige Kondensationsreaktion im Hinblick auf eingesetztes Acetoxysiloxan/silan handelt.

24. Verwendung der härtbaren Kondensationsverbindungen nach einem der Ansprüche 1 - 10 zur Herstellung von Beschichtungen, vorzugsweise mit anti-adhäsiv-Eigenschaften, anti-graffiti-Eigenschaften, anti-Friction-Eigenschaften, hydrophoben Eigenschaften und/oder Antifouling Eigenschaften.

25. Beschichtetes Produkt mit einer Beschichtung enthaltend eine Kondensationsverbindung nach einem der Ansprüche 1 - 10.
